# EUROPEAN PATENT APPLICATION

(11) **EP 4 653 967 A1**
(43) Date of publication of application: **26.11.2025**
(21) Application number: 24177065.0
(22) Date of filing: 21.05.2024
(51) Int. Cl.: G05B 23/02, G05B 19/4063, G06N 20/00, G06F 11/07

(54) **DCS SOFTWARE TROUBLESHOOTING ASSISTANT**

(71) Applicant: ABB SCHWEIZ AG, 5400 Baden (CH)
(72) Inventor: KOZIOLEK, Heiko, 76227 Karlsruhe (DE); SAHLAB, Nada, 68159 Mannheim (DE); LINSBAUER, Sofia, 69221 Dossenheim (DE); ESKANDANI, Nafise, 64380 Rossdorf (DE)
(74) Representative: Maiwald GmbH

(57) **Abstract**

There is disclosed a method for supporting troubleshooting software and hardware issues in a distributed control system, DCS, associated with an automation equipment in industrial plant. The method comprises monitoring data from the DCS and/or monitoring data from the automation equipment. The method further comprises detecting an anomaly in the monitored data based on predetermined anomaly detection rules. The method further comprises, based on a result of the detecting, performing, for a detected anomaly, a similarity search on historic anomaly data associated with the DCS and/or the automation equipment. The method further comprises, based on a result of the performed similarity search, querying a large language model, LLM, (160) for diagnosis and/or recommendation for troubleshooting the detected anomaly. The method further comprises, based on the querying, obtaining an output from the LLM (160), wherein the output is indicative of a diagnosis and/or recommendation for troubleshooting the detected anomaly. The method further comprises providing the output to a user (180).

## Description

### FIELD OF THE INVENTION

The invention relates to a DCS Software Troubleshooting Assistant.

### BACKGROUND

Diagnosing software problems and hardware problems in large distributed systems, spanning real-time controllers, on-site servers, and cloud-hosted servers is challenging due to the complex interplay of thousands of hardware and software components. Observability and diagnosis software used in consumer-facing applications is often purely focused on log, metric, and tracing data coming from the software components. Thus, it may be hard for users to diagnose hardware/software problems if the root cause is not in the software components. This may delay troubleshooting severely and can lead to unnecessary prolonged downtimes and gives a poor user experience.

Hence, there are several drawbacks available regarding the diagnosing of software problems and of hardware problems in large distributed systems. Thus, there is room and need for improvement.

### SUMMARY

In view of the above, it is an object of the present disclosure to overcome at least part of the drawbacks available in diagnosing of software problems and of hardware problems in large distributed systems.

Therefore, to address one or more of these drawbacks, there is provided, in a first aspect, a method for supporting troubleshooting software and hardware issues in a distributed control system, DCS, associated with an automation equipment in industrial plant. The method comprises monitoring data from the DCS and/or monitoring data from the automation equipment. The method further comprises detecting an anomaly in the monitored data based on predetermined anomaly detection rules. The method further comprises, based on a result of the detecting, performing, for a detected anomaly, a similarity search on historic anomaly data associated with the DCS and/or the automation equipment. The method further comprises, based on a result of the performed similarity search, querying a large language model, LLM, for diagnosis and/or recommendation for troubleshooting the detected anomaly. The method further comprises, based on the querying, obtaining an output from the LLM, wherein the output is indicative of a diagnosis and/or recommendation for troubleshooting the detected anomaly. The method further comprises providing the output to a user.

It shall be noted that historic anomaly data may be understood to comprise data indicative of past detected anomalies, which were detected at the DCS and/or the automation equipment. Further, troubleshooting the detected anomaly may be understood as eliminating or correcting the detected anomaly.

A diagnosis may comprise, as a mere example for improving understandability only, that an anomaly is detected for a component of the automation equipment, for example that a temperature in a boiler is above a predetermined temperature threshold value. The data monitored from the DCS may not provide any hint for why the predetermined temperature threshold value may be exceeded. For example, no user was logged in who could have been allowed to overrule a preset temperature control. However, the similarity search may find a similar past situation according to which a heating element in the boiler was defective so that, as a result, the predetermined temperature threshold value was exceeded. Then, the diagnosis may comprise that the boiler comprises a defective heating element. Additionally, prior to providing the diagnosis, data related to the heating elements of the boiler may be checked and a defective one may be identified, so that the defective one may be indicated in the diagnosis. Based thereon, a recommendation may comprise to repair, exchange or deactivate the defective heating element.

The method according to the first aspect is advantageous in that it may participate in enabling for reducing delay of troubleshooting, as information regarding the OT equipment may not need to be manually correlated with information regarding the IT equipment. Thus, it is enabled to diagnose hardware/software problems even if the root cause is in the production process or automation equipment. Hence, unnecessary prolonged downtimes and a poor user experience are at least reduced. Moreover, there is provided more fault traceability and more efficient monitoring processes. In addition, it is enabled to collect troubleshooting sessions for further analysis and long-term product improvement.

According to several examples of the present disclosure, the monitoring data from the DCS may comprise monitoring metrics, logs and traces from software components and/or hardware components from a server of the DCS. The monitoring data from the automation equipment may comprise monitoring production process data associated with a production process at the automation equipment.

It shall be noted that the production process data may be data that come from the automation equipment, for example in case a production process is running at the automation equipment.

Hence, an extensive and comprehensive monitoring is enabled. This may provide basis for an extensive and comprehensive anomaly detection.

According to several examples of the present disclosure, the monitoring the metrics, logs and traces may comprise monitoring the metrics, logs and traces for at least one software component and/or hardware component among the software components and/or hardware components based on component-specific predetermined anomaly detection rules, which may be specific for the at least one software component and/or hardware component.

Hence, the monitoring may be made more individual and thus more detailed and more reliable. This may provide further improved basis for an extensive and comprehensive anomaly detection.

According to several examples of the present disclosure, the method may further comprise obtaining first data indicative of first monitoring data from the monitoring of the data from the DCS. The method may further comprise obtaining second data indicative of second monitoring data from the monitoring of the data from the automation equipment. The method may further comprise joint analysing of the first data and second data, based on correlating at least part of the first data with at least part of the second data and/or based on correlating at least part of the second data with at least part of the first data. The detecting may comprise detecting an anomaly further based on a result of the joint analysing.

It shall be noted that joint analysing may also be understood as a combined analysing. Joint analysing may also be understood as analysing the first data and the second data separately or subsequently, but comparing or cross-analysing results from the separate or subsequent analysing. I.e., the first data are not analysed alone or exclusively, and the second data are not analysed alone or exclusively.

As a mere example for improving understandability only, an anomaly may be detected for a component of the automation equipment, for example a temperature in a boiler is above a predetermined temperature threshold value. The data monitored from the automation equipment may not provide any hint for why the predetermined temperature threshold value may be exceeded. For example, no defective heating element may be identified. The data monitored from the DCS, when analysed in isolation, may not provide any hint for why the predetermined temperature threshold value may be exceeded either. However, for example, the data monitored from the DCS may indicate that a user was logged in to the system who is allowed to overrule a preset temperature control. The joint analysing may allow to identify a connection between the user login and the exceeded predetermined temperature threshold value. Similarity search may allow to diagnose that the user has, perhaps coincidentally, overruled the preset temperature control so that, as a result, the predetermined temperature threshold value was exceeded. Based thereon, a recommendation may comprise to readjust the temperature or to deactivate the user's allowance to overrule the preset temperature control.

Hence, additional insight is gained. Thus, root cause identification of hardware/software problems is improved.

According to several examples of the present disclosure, the method may further comprise receiving, via a user interface, a user feedback for the output; and performing at least one of the following:
- training or fine-tuning the LLM based on the received user feedback, and
- providing the received user feedback to the LLM for the LLM to process the received user feedback in a conversation between the user and the LLM.

It shall be noted that, since the method considers a conversational user interface, a user can interact with the LLM (or the software agent which is communicatively connected to the LLM) in a dialog or conversation to refine diagnostics and/or recommendations obtained as output from the LLM regarding one or more detected anomalies. Hence, the user feedback can also be immediately used in a conversation with the LLM, since the user feedback can be directly processed by the LLM.

Hence, accuracy, speed and quality in anomaly detection is further increased.

According to several examples of the present disclosure, the method may further comprise storing historic data indicative of at least one of:
- a plurality of past diagnosis on detected anomalies,
- a plurality of past recommendations on detected anomalies, and
- a plurality of user conversations on detected anomalies, the conversations received via the user interface.

The method may further comprise training or fine-tuning the LLM based on the stored historic data.

Hence, an extensive knowledgebase for training or fine-tuning the LLM may be obtained. Thus, performance in anomaly detection of the LLM may be further improved.

According to several examples of the present disclosure, the querying may comprise iteratively querying the LLM. Additionally or alternatively, the output may be indicative of a plurality of diagnosis and/or of a plurality of recommendations. Additionally or alternatively, the obtaining of the output may comprise obtaining a ranking of diagnosis alternatives and/or of recommendation alternatives.

It shall be noted that iteratively querying the LLM may be understood as also comprising repetitively querying. For example, in a conversation between the LLM and the user via the software agent, the user may respond to an output provided by the LLM via the software agent. The LLM may then provide a further output in response to the user's response. The user may then further respond and the interaction between the LLM and the user via the software agent is continued, i.e. the user repetitively responses to outputs provided by the LLM, wherein each one of the outputs is based on the latest user response received. Thus, it may be understood that the LLM is iteratively queried by the software agent.

Hence, reliability, applicability and/or accuracy of the LLM's output, i.e. of the output diagnosis and/or recommendations, may be further increased in an easy, efficient, intuitive and user-friendly manner.

According to several examples of the present disclosure, the ranking may be indicative of a probability that a diagnosis is correct and/or that an application of a recommendation will be successful, and wherein the ranking may be based on training data used for training the LLM.

It shall be noted that the more anomaly related training data may be used for training the LLM, the more accurate the LLM may diagnose a detected anomaly and/or may provide an applicable recommendation for a detected anomaly. The training data may be historic data and/or simulated data. Hence, based on an increased knowledgebase of the LLM, the LLM may know more reliably, whether a diagnosis or recommendation would be correct. Based thereon, the LLM may assign probabilities to its output diagnosis or recommendations, wherein the probabilities may indicate a potential correctness of a diagnosis and/or may indicate a potential success in application of a recommended measure to eliminate a detected anomaly.

Hence, a user may be provided with several ranked alternatives, which may enable the user to evaluate a detected anomaly more comprehensively, and which may thus provide a further improved and more efficient troubleshooting.

According to several examples of the present disclosure, the method may further comprise, based on a result of the obtaining the output, automatically or autonomously taking measures for troubleshooting the detected anomaly based on predetermined rules for automatic or autonomous anomaly troubleshooting.

For example with reference to the example as outlined above, a measure, which may be taken automatically or autonomously by the software agent, may be to deactivate a defective heating element in a boiler.

Hence, a user is relieved and may thus be more focused on detected anomalies, which may require the user to take action.

According to a second aspect, there is provided a control apparatus or data processing apparatus for supporting troubleshooting software and hardware issues in a DCS associated with an automation equipment in industrial plant. The data processing apparatus comprises a processor being configured to carry out the method of the first aspect.

The data processing apparatus according to the second aspect is advantageous in that it may participate in enabling for reducing delay of troubleshooting, as information regarding the OT equipment may not need to be manually correlated with information regarding the IT equipment. Thus, it is enabled to diagnose hardware/software problems even if the root cause is in the production process or automation equipment. Hence, unnecessary prolonged downtimes and a poor user experience are at least reduced. Moreover, there is provided more fault traceability and more efficient monitoring processes. In addition, it is enabled to collect troubleshooting sessions for further analysis and long-term product improvement.

According to a third aspect, there is provided a data processing system or security system for supporting troubleshooting software and hardware issues in a DCS associated with an automation equipment in industrial plant. The data processing system comprising a data processing apparatus of the second aspect being configured to carry out the method of the first aspect. Additionally or alternatively, the system comprises means for carrying out the method of the first aspect.

The data processing system according to the third aspect is advantageous in that it may participate in enabling for reducing delay of troubleshooting, as information regarding the OT equipment may not need to be manually correlated with information regarding the IT equipment. Thus, it is enabled to diagnose hardware/software problems even if the root cause is in the production process or automation equipment.

Hence, unnecessary prolonged downtimes and a poor user experience are at least reduced. Moreover, there is provided more fault traceability and more efficient monitoring processes. In addition, it is enabled to collect troubleshooting sessions for further analysis and long-term product improvement.

According to several examples of the present disclosure, the data processing system may comprise the DCS Software Troubleshooting Assistant, wherein the DCS Software Troubleshooting Assistant may comprise:
- an anomaly configurator;
- an anomaly detector communicatively connected with the anomaly configurator;
- a diagnostics smart retriever communicatively connected with the anomaly detector and a conversational user interface; and
- the conversational user interface.

The anomaly detector may comprise interfaces to databases, the databases comprising a software service logs database and a hardware and/or software metrics database. The diagnostics smart retriever may comprise interfaces to a plant historian database and to a LLM. The conversational user interface may comprise an interface for communication with a user. The anomaly detector may be configured to perform the monitoring according to the method of the first aspect via the interfaces to the databases. The anomaly detector may be further configured to perform the detecting according to the method of the first aspect based on the predetermined anomaly detection rules obtained from the anomaly configurator. The diagnostics smart retriever may be configured to perform the similarity search according to the method of the first aspect by use of the interface to the plant historian database. The diagnostics smart retriever may be further configured to perform the querying according to the method of the first aspect via the interface to the LLM. The conversational user interface may be configured to perform the providing according to the method of the first aspect via the interface to the user.

Hence, a system for efficient anomaly troubleshooting is provided.

According to several examples of the present disclosure, the DCS Software Troubleshooting Assistant may further comprise a troubleshooting session preserver communicatively connected with the diagnostics smart retriever and the conversational user interface. The troubleshooting session preserver may comprise an interface to a troubleshooting session database. The troubleshooting session preserver may be configured to store user feedback received via the conversational user interface and to perform the storing according to the method of the first aspect.

Hence, consideration of a user feedback and/or a user conversation is enabled.

According to a fourth aspect, there is provided an industrial plant comprising a data processing apparatus of the second aspect being configured to carry out the method of the first aspect and/or a data processing system of the third aspect.

By "industrial plant", according to several examples, it may be meant an industrial plant or industrial production plant comprising one or more pipelines, production lines and/or assembly lines for transforming one or more educts into a product and/or for assembling one or more components into a final product. According to several examples, it may be meant an industrial plant in oil industry, in gas industry or in chemical industry.

The industrial plant according to the fourth aspect is advantageous in that it may participate in enabling for reducing delay of troubleshooting, as information regarding the OT equipment may not need to be manually correlated with information regarding the IT equipment. Thus, it is enabled to diagnose hardware/software problems even if the root cause is in the production process or automation equipment. Hence, unnecessary prolonged downtimes and a poor user experience are at least reduced. Moreover, there is provided more fault traceability and more efficient monitoring processes. In addition, it is enabled to collect troubleshooting sessions for further analysis and long-term product improvement.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

The computer-readable medium according to the fifth aspect is advantageous in that it may participate in enabling for reducing delay of troubleshooting, as information regarding the OT equipment may not need to be manually correlated with information regarding the IT equipment. Thus, it is enabled to diagnose hardware/software problems even if the root cause is in the production process or automation equipment. Hence, unnecessary prolonged downtimes and a poor user experience are at least reduced. Moreover, there is provided more fault traceability and more efficient monitoring processes. In addition, it is enabled to collect troubleshooting sessions for further analysis and long-term product improvement.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

The computer program product according to the sixth aspect is advantageous in that it may participate in enabling for reducing delay of troubleshooting, as information regarding the OT equipment may not need to be manually correlated with information regarding the IT equipment. Thus, it is enabled to diagnose hardware/software problems even if the root cause is in the production process or automation equipment. Hence, unnecessary prolonged downtimes and a poor user experience are at least reduced. Moreover, there is provided more fault traceability and more efficient monitoring processes. In addition, it is enabled to collect troubleshooting sessions for further analysis and long-term product improvement.

According to a seventh aspect, there is provided a use of a data processing apparatus of the second aspect, and/or of a data processing system of the third aspect, and/or of an industrial plant of the fourth aspect.

The use according to the seventh aspect is advantageous in that it may participate in enabling for reducing delay of troubleshooting, as information regarding the OT equipment may not need to be manually correlated with information regarding the IT equipment. Thus, it is enabled to diagnose hardware/software problems even if the root cause is in the production process or automation equipment. Hence, unnecessary prolonged downtimes and a poor user experience are at least reduced. Moreover, there is provided more fault traceability and more efficient monitoring processes. In addition, it is enabled to collect troubleshooting sessions for further analysis and long-term product improvement.

The method of the first aspect may be computer implemented.

Optional features of the first aspect may form part of any of the second to seventh aspects, mutatis mutandis.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 shows a component and context view of the DCS Software Troubleshooting Assistant according to several examples of the present disclosure;
- Figure 2 shows technologies and frameworks for implementing the DCS Troubleshooting Assistant according to several examples of the present disclosure;
- Figure 3 illustrates a control flow through the DCS Software Troubleshooting Assistant according to several examples of the present disclosure;
- Figure 4 illustrates a flowchart indicative of a method according to several examples of the present disclosure; and
- Figure 5 shows a block diagram which schematically illustrates a data processing apparatus according to several examples of the present disclosure.

### DETAILED DESCRIPTION

According to several examples of the present disclosure, there is provided a software agent, i.e. the DCS Software Troubleshooting Assistant, that may continuously monitor metrics, logs, and traces from DCS server hardware/software components for anomalies, and at the same time can correlate this data with production process data, like time-series sensor data for example, coming from an automation equipment. Hence, application domain-specific data which may be come from production processes of the automation equipment are not neglected. Thus, there is provided means to diagnose hardware/software problems even if the root cause is in the production process or automation equipment. Therefore, a severe delay of troubleshooting is at least reduced, as information regarding the operation technology (OT) equipment may not need to be manually correlated with information regarding the information technology (IT) equipment. Hence, unnecessary prolonged downtimes and a poor user experience are at least reduced.

Further, according to several examples of the present disclosure, the software agent may utilize a large language model (LLM) to perform queries on the summarized plant OT data for example to generate appropriate and easy-to-understand diagnoses and/or recommendations for troubleshooting to a user. Moreover, the software agent may feature a conversational user interface, so that the user can interact with the software agent in a dialog to refine the diagnostics and recommendations.

Hence, to diagnose and troubleshoot complex hardware/software issues in DCSs, there is provided, according to several examples of the present disclosure, the DCS Software Troubleshooting Assistant. There is further provided a method which suggests combining IT-related data and OT-related data for the diagnosis of hardware/software issues and which utilizes large language models (LLMs) to summarize and analyze the data. Upon encountering an anomaly in the DCS, the DCS Software Troubleshooting Assistant may create an analysis of the situation autonomously and may query a user with ranked diagnosis, recommendations, or resolution alternatives. The user can enter a dialog with the DCS Software Troubleshooting Assistant to refine the situation analysis and suggested resolution steps.

The DCS Software Troubleshooting Assistant may be a purpose-built observability and troubleshooting system for DCSs. It may consist of an anomaly detector, a diagnostics smart retriever, a conversational user interface (UI), and a troubleshooting session preserver. The system may interact with metrics and logs databases, as well as plant historians and vector databases with contextual information. To analyze a given anomaly and find resolution alternatives, i.e. recommendations, the DCS Software Troubleshooting Assistant may iteratively query a LLM, that may turn augmented textual prompts into textual and graphical analyses and may provide a ranked list of resolution alternatives. With the system, users can troubleshoot hardware/software issues faster and with higher quality. In many cases the users do not need to query many databases for diagnostic information but can resolve the issues in an assisted way in a streamlined user interface. Such user interface may manage the complexity of the underlying IT infrastructure for the user.

According to several examples of the present disclosure, there may be provided a harmonizing of process-and IT-related data for troubleshooting. It may further be provided a LLM with DCS-specific context for timely and accurate troubleshooting assistance. Further, it may be enabled a continuously learning approach through saving past alarm resolutions and considering them for handling newly occurring faults. Further, customizing features and thresholds to be monitored based on a DCS's component's criticality level is enabled. Hence, the monitoring may be adapted individually for a single component.

According to several examples of the present disclosure, a purpose of the proposed DCS troubleshooting method as disclosed herein may be to support DCS users in resolving software problems and hardware problems that may affect a functionality and/or performance of the DCS. For example, if a software component fails, the user can use the system (i.e. the DCS) to analyze the log data written by the component before the crash together with the proposed DCS Software Troubleshooting Assistant. The DCS Software Troubleshooting Assistant supports the analysis by referring to logs, metrics, and traces available from the system, by summarizing process data, and by referring to previous similar troubleshooting sessions. The DCS Software Troubleshooting Assistant may suggest different alternatives to resolve the failure, like restarting the component, re-configuring the component, re-deploying the component, or updating the component for example, and may provide step-by-step instructions to the user. The user may still decide which resolution alternative to execute, possibly assisted by the system with predicted success probabilities and/or effort estimations. The predicted success probabilities and/or effort estimations may be provided by the DCS Software Troubleshooting Assistant.

As another example, a server node in a DCS cluster may fail due to a hardware issue. The DCS system will automatically try to restart the failed components on other server nodes in the cluster. But in case the cluster capacity is not sufficient for re-starting all components, the troubleshooting assistant may query the user to select non-critical components to not re-start to keep the critical parts of the system running. The DCS Software Troubleshooting Assistant utilizes a LLM to summarize historical plant data, like time-series data of sensor values for example, and to select similar previous troubleshooting session and their found resolutions from databases.

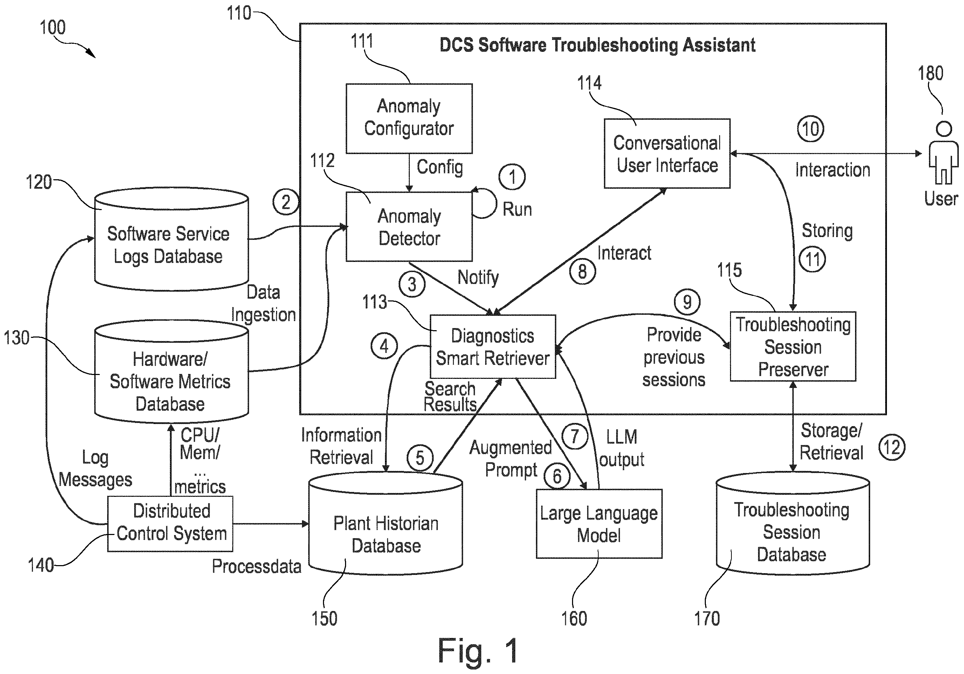

Referring now to Figure 1, Figure 1 schematically illustrates a system 100, which comprises the DCS Software Troubleshooting Assistant 110. The system 100 shown in Figure 1 further comprises databases 120, 130, 150, 170, a DCS 140 and a LLM 160. In more detail, Figure 1 shows a component and context view of the DCS Software Troubleshooting Assistant 110 according to several examples of the present disclosure. The DCS Software Troubleshooting Assistant 110 may consist of an anomaly detector 112, an anomaly configurator 111, a diagnostics smart retriever 113, a troubleshooting session preserver 115, and a conversational user interface 114 to interact with a user 180. Each component can be implemented as several interacting software processes. The entire DCS Software Troubleshooting Assistant software may be run as a continuously running software agent in the DCS cluster. The responsibility of the system components may be as follows:

Anomaly Detector 112: the anomaly detector 112 may run continuously (see step 1 in Figure 1) and may monitor a software service logs database 120, as well as a hardware/software metrics database 130. The logs may contain structured log data with time stamps and events or simply text messages produced by the various software components in the DCS. This kind of data may need to be stored in appropriate databases, like a document-oriented database for example, to allow for fast querying.

The metrics may provide telemetry data on hardware and software, like CPU utilizations, memory consumption, network traffic, execution times, latency, etc. Metrics in IT systems are typically stored in efficient time-series databases to save storage space and support efficient querying. The anomaly detector 112 may be configured to detect outliers or undesired patterns in the log and metric data. Upon a detection the anomaly detector 112 may notify the diagnostics smart retriever 113 with a summary of the event occurred. An implementation of the anomaly detector 112 may be based on a log aggregator, such as Kibana or Grafana Loki.

Anomaly Configurator 111: the anomaly configurator 111 may rule for the anomaly detector 112 that encode thresholds and patterns to identify in the monitored logs and metrics. Hence, the anomaly configurator 111 may provide predetermined anomaly detection rules to the anomaly detector 112 for the anomaly detector 112 to apply these rules. For example, a rule could state that more than 20 log messages for a particular component within a minute could indicate an anomaly. Another rule could state that a CPU loaded for more than 90 percent for more than 5 minutes is an anomaly. Another rule could state that the word "error" occurring in certain log messages indicates an anomaly. Many of these rules may be generic and can be reused across different DCS installations. However, there may be process plant specific rules that need to be added per project. For example, if a production plant uses a batch management application in a particular way, custom rules for anomalies around the batch management component must be formulated. An implementation of the anomaly configurator 111 may be based on a key-value store or directly be embedded into Kubernetes as custom config map.

Diagnostics Smart Retriever 113: the responsibility of the diagnostics smart retriever 113 may be to use available information sources to formulate a prompt to be queried to a LLM 160, improve the quality of the LLM output by iteratively refining the prompts and then to pass the output results to a conversational user interface 114. The diagnostics smart retriever 113 may get a summary of an occurred anomaly from the anomaly detector 112 and may use this to perform information retrieval on a plant historian database 150 and a troubleshooting session database 170. Both databases may be extended with an embedded vector database to store text embeddings of their data. The text embeddings are encodings of the textual data into floating point vectors. These may allow to perform efficient similarity searches with the text embeddings for the anomaly summaries. With the information retrieved from these databases, the diagnostics smart retriever 113 may augment a prompt for the LLM 160 that requests a diagnosis of the occurred anomaly and possible remediations. Because the prompt may be augmented with plant-specific data, the LLM 160 can provide a much more precise and appropriate answer for the context. An implementation of the diagnostics smart retriever 113 could be based on the LangChain framework.

Conversational User Interface 114: the output of the LLM 160 may be an explaining text for the anomaly and is passed by the diagnostics smart retriever 113 to the conversation user interface 114. The conversation user interface 114 notifies the user and displays the obtained information in an easy to process manner. The conversation user interface 114 may for example present the information simply as explaining texts, as lines charts showing threshold violations, or even as overlays on top of topological maps of the DCS cluster, to enable fast user understanding and an informed resolution strategy. The output may already provide possible anomaly resolution alternatives. The conversational user interface 114 may either prompt the user 180 for more information, for example that is not represented in the system, or even simply to select one of the proposed resolution alternatives or recommendation alternatives. Some resolution alternatives may be executed automatically, for example by running a script or issuing a command to the Kubernetes API, but this may not be in the responsibility of the DCS Software Troubleshooting Assistant described herein. User interactions with the conversational user interface 114 may be recorded, for example in JSON format, for later reuse. An implementation of the conversational user interface 114 could be based on Streamlit.

Troubleshooting Session Preserver 115: the troubleshooting session preserver 115 may create text embedding of user conversations, for example a series of questions and answers. The embeddings may be again floating-point vectors that allow for efficient similarity searchers in the future. These embeddings may be stored in a troubleshooting session database 170, which can for example be a vector database. Possibly, the content of these databases could even be shared among different DCS systems, so that users in different systems could learn from the experiences of other users. However, privacy requirements need to be considered, so a shared troubleshooting session database 170 should feature some form of anonymization and obfuscate details of the production plant that could be sensitive intellectual property.

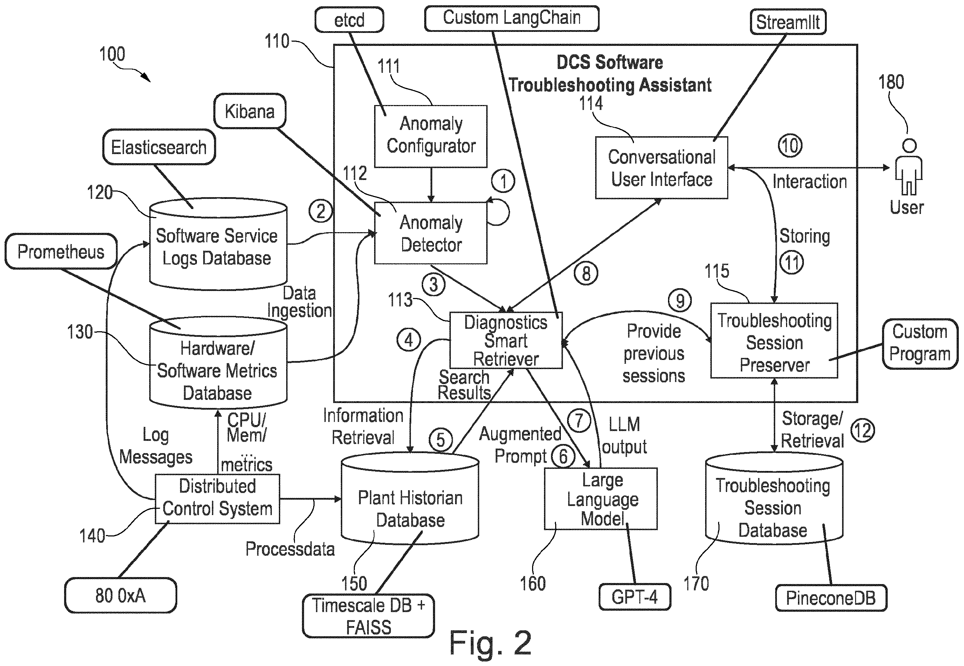

Referring now to Figure 2, Figure 2 depicts different software technologies, components, and databases according to several examples of the present disclosure, that could be used in the system 100 to implement the DCS Software Troubleshooting Assistant 110. According to several examples of the present disclosure, the disclosure itself is generic and may not dependent on these technologies. Each of the referenced technologies would need configuration and/or implementation and could not be used as-is. However, these technologies may provide a basis for quickly creating a possible implementation. These technologies were relevant at the time of writing and underline the technicity of the present disclosure. In the future they may be replaced by more advanced counterparts, however leaving the core idea of the present disclosure intact and valid.

It shall be noted that Figure 2 merely illustrates possible implementation technologies, and not mandatory implementation technologies. These illustrated implementation technologies are mere examples and are not to be understood as limiting the present disclosure to these technologies. Rather, the present disclosure covers any (now and/or future available) possible implementation technologies for implementing at least part of the system 100 according to Figure 1.

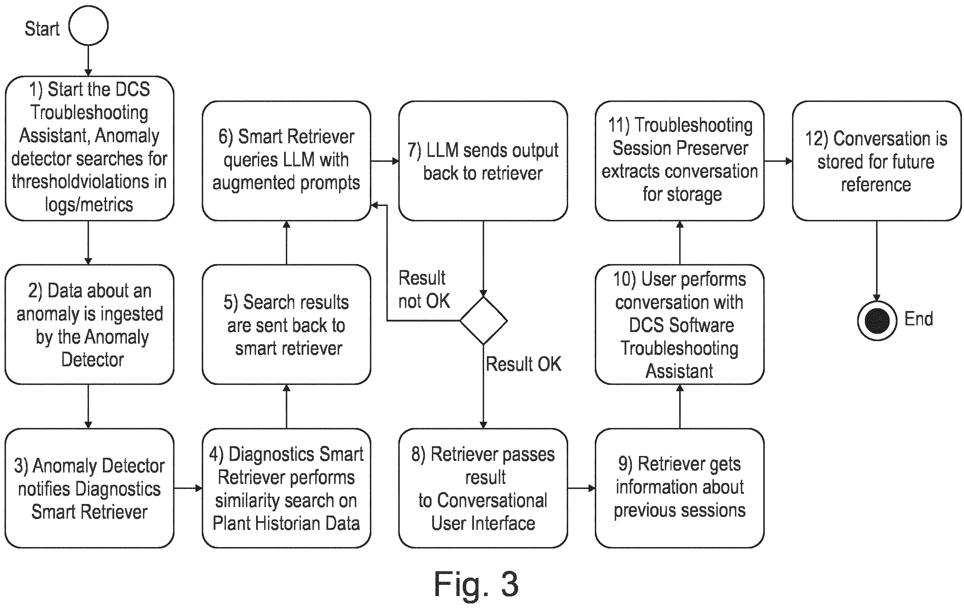

Referring now to Figure 3, Figure 3 shows a possible control flow of a method through the DCS Software Troubleshooting Assistant according to several examples of the present disclosure. Figure 3 shows twelve steps, Step 1 to Step 12, wherein these steps are also indicated in Figures 1 and 2 for easier matching the method steps to the system.

Step 1 of the method may be executed already before any incident during production process startup. The anomaly detector 112 may continuously monitor the logs and metrics generated by the system. For illustrative purposes, the following may be considered. A leakage in a tank in plant area C has led to an alarm flood in the DCS, since the decreasing pressure in the tank had a cascading effect on the feeding pumps and heat exchanger, which all issues numerous alarms. Not only has this affected the automation equipment, but also a software service "B" dealing with alarm filtering has now crashed due to overload.

In Step 2 of the method, continuing the example from Step 1, multiple anomaly rules for high CPU load and high log rates have been triggered and the anomaly detector 112 has identified an anomaly. At this point the root cause (i.e. the tank leakage) is unknown because this is not reflected in the logging data.

In Step 3, the anomaly detector 112 extracts the relevant logs and metrics from the available data and sends it to the diagnostics smart retriever 113.

In Step 4, the diagnostics smart retriever 113 constructs a generic troubleshooting prompt for an LLM 160, and then uses the data from the anomaly detector 112 to perform a similarity search on the latest plant historian data. Because the anomaly detector 112 reported timestamps of the incident, the similarity search finds in the plant historian data a sensor reading at the same time stamp and can identify the plant area affected.

In Step 5, the search results already contain the drastically decreasing pressure reading in the affected tank.

In Step 6, the diagnostics smart retriever 113 thus augments the generic prompt with a summary of the pressure readings and prompts the LLM 160 for possible resolution scenarios.

In Step 7, the LLM 160 can now utilize its vast trained domain- and incident-knowledge, as well as technical knowledge on various hardware and software components to come up with possible resolutions (i.e. diagnosis and/or recommendations) to the situation. For example, the LLM 160 suggests restarting the software service "B" after the tank has been repaired, and the method proceeds to Step 8. Otherwise, in case the LLM 160 may not obtain any possible or sufficiently reliable resolution for example (for example reliability, applicability and/or success rate not reaching a predetermined minimum reliability, a predetermined minimum applicability and/or a predetermined minimum success rate), the LLM 160 may notify the diagnostics smart retriever 113 accordingly and the method returns to Step 6.

In Step 8, the diagnostics smart retriever 113 sends the LLM output to the conversational user interface 114, where the LLM output is displayed to the user 180. The conversational user interface 114 may contain graphics, charts, and textual explanations for a detailed diagnosis of the situation.

In Step 9, the diagnostics smart retriever 113 may also send LLM output obtained via retrieval-augmented generation from the troubleshooting session database 170 to the conversational user interface 114.

In Step 10, the user 180 may now ask for additional information, for example retrieving more detailed log data, and judge the provided resolution alternatives. In this case, the user may decide to follow the recommendation to restart service B once the tank is repaired and finally ends the conversation.

In Step 11, the questions and answers in this user conversation are extracted, possibly anonymized, and filtered for unneeded detail, and then, in Step 12, stored by the troubleshooting session preserver 115 for future reference.

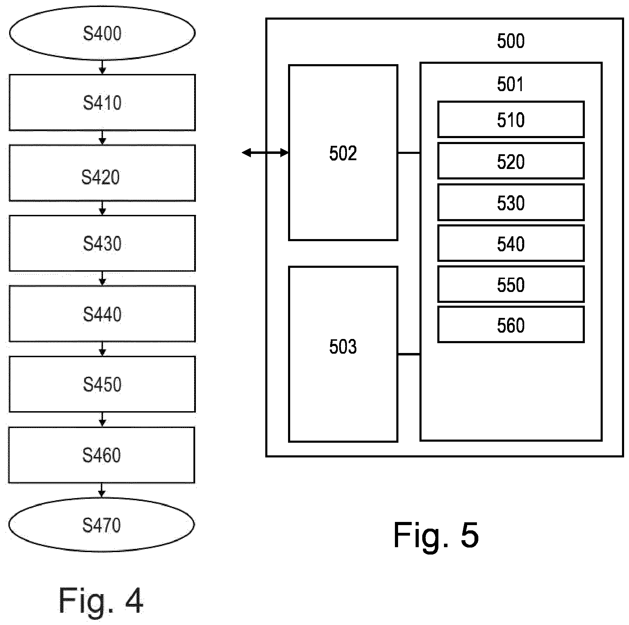

Referring now to Figure 4, Figure 4 illustrates a flowchart indicative of a method according to several examples of the present disclosure. The method is a method for supporting troubleshooting software and hardware issues in a DCS associated with an automation equipment in industrial plant.

The method according to Figure 4 may be applied by such DCS Software Troubleshooting Assistant 110 as outlined above with reference to Figures 1 and 2.

The method starts in S400.

In S410, the method comprises monitoring data from the DCS and/or monitoring data from the automation equipment.

In S420, the method comprises detecting an anomaly in the monitored data based on predetermined anomaly detection rules.

In S430, the method comprises, based on a result of the detecting, performing, for a detected anomaly, a similarity search on historic anomaly data associated with the DCS and/or the automation equipment.

In S440, the method comprises, based on a result of the performed similarity search, querying a LLM 160 for diagnosis and/or recommendation for troubleshooting the detected anomaly.

In S450, the method comprises, based on the querying, obtaining an output from the LLM 160, wherein the output is indicative of a diagnosis and/or recommendation for troubleshooting the detected anomaly.

In S460, the method comprises providing the output to a user 180.

The method ends in S470.

According to several examples of the present disclosure, there is provided a data processing apparatus for supporting troubleshooting software and hardware issues in a DCS associated with an automation equipment in industrial plant. The data processing apparatus may be configured to, i.e. may comprise a processor being configured to carry out the method of Figure 3 and/or to carry out the method of Figure 4. The data processing apparatus may represent and/or may function as such DCS Software Troubleshooting Assistant 110 as outlined above with reference to Figures 1 and 2.

In more detail, according to various examples, the data processing apparatus configured to carry out the method of Figure 3 and/or Figure 4 may, with reference to Figure 5 for example, which shows a block diagram which schematically illustrates a data processing apparatus 500 according to several examples of the present disclosure, comprise a processing circuitry, a processing function, a processing means or a processor 501, which enables the data processing apparatus 500 to participate for supporting troubleshooting software and hardware issues in a DCS associated with an automation equipment in industrial plant. The processor 501 may comprise one or more processing portions or functions, wherein the processing portions or functions may be provided as one or more physical or virtual entities. The data processing apparatus 500 may comprise one or more communication interfaces 502. The data processing apparatus 500 may further comprise a memory or memory unit 503 for storing data, programs and/or instructions to be executed by the processing unit 501. The memory 503 may be a memory internal to the data processing apparatus 500 or may be a memory external to the data processing apparatus 500, for example at a cloud server. The processor 501 may comprise one or more portions, which enable the data processing apparatus 500 to execute the method of Figure 3 and/or Figure 4, for example. According to several examples of the present disclosure, with reference to Figure 5 as an example, a monitoring portion 510 may be configured to perform such monitoring according to S410 of Figure 4, a detecting portion 520 may be configured to perform such detecting according to S420 of Figure 4, a performing portion 530 may be configured to perform such performing according to S430 of Figure 4, a querying portion 540 may be configured to perform such querying according to S440 of Figure 4, an obtaining portion 550 may be configured to perform such obtaining according to S450 of Figure 4, and a providing portion 560 may be configured to perform such providing according to S460 of Figure 4.

The portions of the data processing apparatus 500 may also be realized by means for carrying out the certain functions, for example. For example, the data processing apparatus 500 may comprise means for carrying out the method according to Figure 3 and/or Figure 4.

According to several examples of the present disclosure, there is provided a data processing system for supporting troubleshooting software and hardware issues in a DCS associated with an automation equipment in industrial plant. The data processing system may comprise a data processing apparatus as outlined above being configured to carry out the method of Figure 3 and/or to carry out the method of Figure 4. Additionally or alternatively, the data processing system may comprise means for carrying out the method of Figure 3 and/or for carrying out the method of Figure 4. The data processing system may represent and/or function as such system 100 as outlined above with reference to Figures 1 and 2.

According to several examples of the present disclosure, there is provided an industrial plant comprising the data processing apparatus as outlined above and/or the data processing system as outlined above.

According to several examples of the present disclosure, there is provided a computer-readable medium comprising instructions which, when executed by a computing system, cause the computing system to perform the method of Figure 3 and/or to perform the method of Figure 4. The computer-readable medium may be transitory or non-transitory, volatile or non-volatile.

According to several examples of the present disclosure, there is provided a computer program product comprising instructions which, when executed by a computing system, enable or cause the computing system to perform the method of Figure 3 and/or to perform the method of Figure 4. The computer program product may comprise a computer-readable medium comprising instructions of the computer program product.

According to several examples of the present disclosure, there is provided a use of the data processing apparatus as outlined above, and/or of the data processing system as outlined above, and/or of the industrial plant as outlined above.

The method according to Figure 3 and/or Figure 4 may be computer implemented.

Optional features of the methods according to Figure 3 and/or Figure 4 may form part of any of the data processing apparatus, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for supporting troubleshooting software and hardware issues in a distributed control system, DCS, associated with an automation equipment in industrial plant, the method comprising:
monitoring (S410) data from the DCS and/or monitoring (S410) data from the automation equipment;
detecting (S420) an anomaly in the monitored data based on predetermined anomaly detection rules;
based on a result of the detecting, performing (S430), for a detected anomaly, a similarity search on historic anomaly data associated with the DCS and/or the automation equipment;
based on a result of the performed similarity search, querying (S440) a large language model, LLM, (160) for diagnosis and/or recommendation for troubleshooting the detected anomaly;
based on the querying, obtaining (S450) an output from the LLM (160), wherein the output is indicative of a diagnosis and/or recommendation for troubleshooting the detected anomaly; and
providing (S460) the output to a user (180).

2. The method according to claim 1,
wherein the monitoring data from the DCS comprises monitoring metrics, logs and traces from software components and/or hardware components from a server of the DCS; and
wherein the monitoring data from the automation equipment comprises monitoring production process data associated with a production process at the automation equipment.

3. The method according to claim 2, wherein the monitoring the metrics, logs and traces comprises monitoring the metrics, logs and traces for at least one software component and/or hardware component among the software components and/or hardware components based on component-specific predetermined anomaly detection rules, which are specific for the at least one software component and/or hardware component.

4. The method according to any of claims 1 to 3, further comprising
obtaining first data indicative of first monitoring data from the monitoring of the data from the DCS;
obtaining second data indicative of second monitoring data from the monitoring of the data from the automation equipment; and
joint analysing of the first data and second data, based on correlating at least part of the first data with at least part of the second data and/or based on correlating at least part of the second data with at least part of the first data,
wherein the detecting comprises detecting an anomaly further based on a result of the joint analysing.

5. The method according to any of claims 1 to 4, further comprising
receiving, via a user interface (114), a user feedback for the output and performing at least one of the following:
training or fine-tuning the LLM (160) based on the received user feedback, and
providing the received user feedback to the LLM (160) for the LLM (160) to process the received user feedback in a conversation between the user (180) and the LLM (160).

6. The method according to any of claims 1 to 5, further comprising
storing historic data indicative of a plurality of past diagnosis and/or of a plurality of past recommendations and/or of a plurality of user conversations on detected anomalies received via the user interface (114); and
training the LLM (160) based on the stored historic data.

7. The method according to any of claims 1 to 6,
wherein the querying comprises iteratively querying the LLM (160); and/or
wherein the output is indicative of a plurality of diagnosis and/or of a plurality of recommendations; and/or
wherein the obtaining of the output comprises obtaining a ranking of diagnosis alternatives and/or of recommendation alternatives.

8. The method according to claim 7, wherein the ranking is indicative of a probability that a diagnosis is correct and/or that an application of a recommendation will be successful, and wherein the ranking is based on training data used for training the LLM (160).

9. The method according to any of claims 1 to 8, further comprising, based on a result of the obtaining the output, automatically taking measures for troubleshooting the detected anomaly based on predetermined rules for autonomous anomaly troubleshooting.

10. A data processing apparatus (110) for supporting troubleshooting software and hardware issues in a distributed control system, DCS, associated with an automation equipment in industrial plant, the data processing apparatus (110) comprising a processor being configured to carry out the method of any of claims 1 to 9.

11. A data processing system (100) for supporting troubleshooting software and hardware issues in a distributed control system, DCS, associated with an automation equipment in industrial plant, the data processing system (100) comprising a data processing apparatus (110) of claim 10 and/or the data processing system (100) comprising means for performing the method of any of claims 1 to 9.

12. The data processing system (100) according to claim 11, wherein the data processing system (100) comprises a DCS software troubleshooting assistant (110), the DCS software troubleshooting assistant (110) comprising:
an anomaly configurator (111);
an anomaly detector (112) communicatively connected with the anomaly configurator (111);
a diagnostics smart retriever (113) communicatively connected with the anomaly detector (112) and a conversational user interface (114); and
the conversational user interface (114);
wherein
the anomaly detector (112) comprises interfaces to databases, the databases comprising a software service logs database (120) and to a hardware and/or software metrics database (130);
the diagnostics smart retriever (113) comprises interfaces to a plant historian database (150) and to a LLM (160); and
the conversational user interface (114) comprises an interface for communication with a user (180);
and wherein
the anomaly detector (112) is configured to perform the monitoring according to any of claims 1 to 9 via the interfaces to the databases (120; 130);
the anomaly detector (112) is further configured to perform the detecting according to any of claims 1 to 9 based on the predetermined anomaly detection rules obtained from the anomaly configurator (111);
the diagnostics smart retriever (113) is configured to perform the similarity search according to any of claims 1 to 9 by use of the interface to the plant historian database (150);
the diagnostics smart retriever (113) is further configured to perform the querying according to any of claims 1 to 9 via the interface to the LLM (160); and
the conversational user interface (114) is configured to perform the providing according to any of claims 1 to 9 via the interface to the user (180).

13. The data processing system (100) according to claim 12, wherein DCS software troubleshooting assistant (110) further comprises:
a troubleshooting session preserver (115) communicatively connected with the diagnostics smart retriever (113) and the conversational user interface (114);
wherein the troubleshooting session preserver (115) comprises an interface to a troubleshooting session database (170);
and wherein the troubleshooting session preserver (115) is configured to store user feedback received via the conversational user interface (114) and to perform the storing according to claim 6.

14. A computer-readable medium comprising instructions which, when executed by a computing system, cause the computing system to perform the method of any of claims 1 to 9.

15. A computer program product comprising instructions which, when executed by a computing system, enable and/or cause the computing system to perform the method of any of claims 1 to 9.
